# EUROPÄISCHE PATENTSCHRIFT

(11) **EP 3 695 998 B1**
(45) Veröffentlichungstag und Bekanntmachung des Hinweises auf die Patenterteilung: **31.08.2022**
(21) Anmeldenummer: 19157536.4
(22) Anmeldetag: 15.02.2019
(51) Int. Cl.: B60H 1/00, B60P 3/20, B62D 33/04, F25D 17/06, F25D 19/00, F25D 17/00

(54) **KOFFERAUFBAU MIT LUFTLEITEINRICHTUNG**
BOX BODY WITH VENTING DEVICE
CAISSE POURVUE DE DISPOSITIF DE GUIDAGE D'AIR

(43) Veröffentlichungstag der Anmeldung: 19.08.2020
(73) Patentinhaber: Schmitz Cargobull AG, 48341 Altenberge (DE)
(72) Erfinder: Kuhn, Marco, 48691 Vreden (DE); Lünenborg, Stefan, 46325 Weseke (DE)
(74) Vertreter: Cohausz & Florack

(56) Entgegenhaltungen:
- EP-A2- 0 282 051
- EP-A2- 1 122 191
- EP-A2- 1 930 211
- DE-A1- 2 809 123
- US-A- 3 792 595
- US-A1- 2009 320 514

## Beschreibung

Die Erfindung betrifft einen Kofferaufbau für ein Nutzfahrzeug, insbesondere Lastkraftwagen, Anhänger oder Sattelauflieger, mit einem Laderaum zur Aufnahme von Ladung und mit einer Transportkältemaschine zum Kühlen des Laderaums, wobei die Transportkältemaschine wenigstens eine Kühlluftöffnung zum Ausströmen von Kühlluft aufweist, wobei wenigstens eine in dem Laderaum angeordnete Luftleiteinrichtung zum Leiten der aus der wenigstens einen Kühlluftöffnung ausströmenden Kühlluft von wenigstens einer Einlassöffnung wenigstens eines Einlassabschnitts der Luftleiteinrichtung zu wenigstens einem hinteren Ende wenigstens eines Auslassabschnitts der Luftleiteinrichtung vorgesehen ist und wobei der wenigstens eine Einlassabschnitt als wenigstens im Wesentlichen umlaufend geschlossener Kanal ausgebildet ist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Daches des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Auch die Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport geeignet.

Bei Kühltransporten ist in der Regel sicherzustellen, dass die Temperatur der temperaturempfindlichen Güter einen von den jeweiligen Gütern abhängigen Temperaturgrenzwert nicht übersteigt, um Qualitätsminderungen der Güter zu verhindern. So kann es etwa beim Transport von tiefgekühlten Lebensmitteln erforderlich sein, dass die Temperatur im Laderaum unterhalb eines Werts von beispielsweise -20 °C gehalten wird. Deshalb weisen viele der für den Kühltransport eingesetzten Kofferaufbauten eine sogenannte Transportkältemaschine auf, mit der eine aktive Kühlung des Laderaums und somit der in dem Laderaum aufgenommenen Güter bzw. Ladung erfolgen kann. Dabei ist die Transportkältemaschine meist an der Stirnwand des Kofferaufbaus montiert und wenigstens teilweise außerhalb des Kofferaufbaus angeordnet.

Unabhängig von der Anordnung der Transportkältemaschine erfolgt die Kühlung des Laderaums durch die Transportkältemaschine in aller Regel, indem Luft aus dem Laderaum angesaugt und in der Transportkältemaschine durch Entzug von Wärme und Abgabe der Wärme an die Umgebung außerhalb des Kofferaufbaus abgekühlt wird. Die abgekühlte Luft wird als Kühlluft zurück in den Laderaum geblasen. Dabei weist die Transportkältemaschine zum Zurückblasen der Kühlluft aus der Transportkältemaschine in den Laderaum typischerweise wenigstens eine Kühlluftöffnung auf, über die die Kühlluft aus der Transportkältemaschine ausströmt. Je nach dem Typ der Transportkältemaschine kann diese auch mehrere voneinander beabstandete Kühlluftöffnungen aufweisen. Dabei ist die wenigstens eine Kühlluftöffnung entsprechend der Montageposition der Transportkältemaschine häufig im Bereich der Stirnwand des Kofferaufbaus und vom Dach des Kofferaufbaus beabstandet angeordnet.

Um die aus der wenigstens einen Kühlluftöffnung ausströmende Kühlluft von der Kühlluftöffnung wegzuleiten, ist bei Kofferaufbauten, die für den Kühltransport vorgesehen sind, neben der Transportkältemaschine häufig wenigstens eine in dem Laderaum angeordnete Luftleiteinrichtung vorgesehen. Diese Luftleiteinrichtung, auch Lufthutze genannt, dient in der Regel dazu, die aus der wenigstens einen Kühlluftöffnung ausströmende Kühlluft in einen oder mehrere, insbesondere sich entlang des Dachs des Kofferaufbaus erstreckende, Luftkanäle zu leiten, über die die Kühlluft in von der Kühlluftöffnung weiter entfernte Bereiche des Laderaums transportiert wird und so im gesamten Laderaum verteilt wird. Auf diese Weise können auch die Bereiche des Laderaums, die nicht in unmittelbarer Nähe zu der wenigstens einen Kühlluftöffnung angeordnet sind, effektiv gekühlt werden und kann eine annähernd homogene Temperaturverteilung im Laderaum erreicht werden. Die Luftleiteinrichtung fungiert dann also als die wenigstens eine Kühlluftöffnung und die Luftkanäle verbindendes Bindeglied. Unabhängig davon ist unter der Luftleiteinrichtung insbesondere eine solche zu verstehen, die sich höchstens über 50 %, vorzugsweise höchstens über 25 %, insbesondere höchstens über 10 %, der Länge des Kofferaufbaus erstreckt.

Häufig weist die Luftleiteinrichtung wenigstens einen Einlassabschnitt mit wenigstens einer Einlassöffnung und wenigstens einen Auslassabschnitt mit wenigstens einem hinteren Ende auf. Dann kann die aus der wenigstens einen Kühlluftöffnung der Transportkältemaschine ausströmende Kühlluft über die wenigstens eine Einlassöffnung in den wenigstens einen Einlassabschnitt einströmen und von dort zu dem wenigstens einen hinteren Ende des wenigstens einen Auslassabschnitts geleitet werden. Dabei ist mit dem wenigstens einen hinteren Ende des wenigstens einen Auslassabschnitts insbesondere das von der Einlassöffnung abgewandte Ende des Auslassabschnitts gemeint. Im unmontierten Zustand der Luftleiteinrichtung kann das wenigstens eine hintere Ende also ein freies Ende des wenigstens einen Auslassabschnitts darstellen. Unabhängig davon stellt das hintere Ende des wenigstens einen Auslassabschnitts häufig auch das hintere Ende der Luftleiteinrichtung dar, zwingend erforderlich ist dies jedoch nicht.

In dem Einlassabschnitt ist die Luftleiteinrichtung häufig als wenigstens im Wesentlichen umlaufend geschlossener Kanal ausgebildet und nicht nach oben durch das Dach begrenzt. Auf diese Weise kann vermieden werden, dass sich der Strömungsquerschnitt der Kühlluftströmung beim Austritt aus der Kühlluftöffnung und Einströmen in den Einlassabschnitt plötzlich stark vergrößert, was zu erhöhten Druckverlusten in der Kühlluftströmung führt. So kann letztlich verhindert werden, dass es entlang des Einlassabschnitts zu signifikanten Volumenstromverlusten der Kühlluftströmung kommt. Eine entsprechende Luftleiteinrichtung, bei der nicht nur der Einlassabschnitt, sondern die Luftleiteinrichtung insgesamt als umlaufend geschlossener Kanal ausgebildet ist, ist beispielsweise aus der WO 2014/ 176 044 A1 und der EP 1 930 211 A2 bekannt.

Aufgrund kundenspezifischer Anforderungen kann der Bereich, zu dem die Kühlluft von der Kühlluftöffnung mittels der Luftleiteinrichtung geleitet werden soll, von Kofferaufbau zu Kofferaufbau variieren, etwa bei unterschiedlichen Anordnungen der der Luftleiteinrichtung nachgeordneten Luftkanäle. Aufgrund dessen und da die am Markt erhältlichen Transportkältemaschinen, insbesondere hinsichtlich der Anordnung ihrer Kühlluftöffnungen, nicht standardisiert sind, muss die Luftleiteinrichtung an den jeweiligen Kofferaufbau angepasst bzw. entsprechend ausgewählt sein. Dies zieht einen höheren logistischen Aufwand und somit einen Anstieg der Herstellungskosten nach sich.

Daher liegt der vorliegenden Erfindung die Aufgabe zugrunde, den Kofferaufbau der eingangs genannten und zuvor näher erläuterten Art derart auszugestalten und weiterzubilden, dass die Herstellungskosten für den Kofferaufbau gesenkt werden können.

Diese Aufgabe wird bei einem Kofferaufbau nach dem Oberbegriff des Anspruchs 1 dadurch gelöst, dass die Luftleiteinrichtung wenigstens einen flexibel, gelenkig und/oder teleskopierbar ausgebildeten Verstellabschnitt zum Verstellen des wenigstens eines hinteren Endes des wenigstens einen Auslassabschnitts gegenüber der wenigstens einen Einlassöffnung zwischen wenigstens zwei voneinander beabstandeten Leitstellungen wenigstens im teilmontierten Zustand der Luftleiteinrichtung im Laderaum aufweist.

Mittels des wenigstens einen Verstellabschnitts kann also das wenigstens eine hintere Ende des wenigstens einen Auslassabschnitts, das im Nachfolgenden kurz als das wenigstens eine hintere Ende bezeichnet wird, relativ zu der wenigstens einen Einlassöffnung verstellt werden, wenn sich die Luftleiteinrichtung in einem teilmontierten Zustand befindet. Das Verstellen des wenigstens einen hinteren Endes erfolgt dabei zwischen wenigstens zwei Leitstellungen, die jeweils das Leiten der Kühlluft von der wenigstens einen Einlassöffnung zu dem wenigstens einen hinteren Ende ermöglichen, aber auf unterschiedlichem Wege oder auf unterschiedliche Weise. So kann bei der Montage der Luftleiteinrichtung in dem Laderaum die Relativstellung des wenigstens einen hinteren Endes zur wenigstens einen Einlassöffnung an die Position der wenigstens einen Kühlluftöffnung und die Lage des Bereichs, zu dem die Kühlluft mittels der Luftleiteinrichtung geleitet werden soll, angepasst werden. Die Anzahl der bei der Fertigung der Kofferaufbauten benötigten verschiedenen Arten an Luftleiteinrichtungen wird so verringert. Dies führt wiederum zur Reduzierung des bei der Herstellung des Kofferaufbaus entstehenden Logistikaufwands und zu verringerten Herstellungskosten.

Dabei kommt es hinsichtlich des Verstellens des wenigstens einen hinteren Endes zwischen den wenigstens zwei Leitstellungen auf eine Veränderung der absoluten Stellung des wenigstens einen hinteren Endes nicht an, sondern lediglich auf die Veränderung der relativen Stellung des wenigstens einen hinteren Endes gegenüber der wenigstens einen Einlassöffnung. Mithin kann ein Verstellen des wenigstens einen hinteren Endes gegenüber der wenigstens Einlassöffnung zwischen den wenigstens zwei Leitstellungen im Sinne der Erfindung auch erfolgen, indem bei nicht veränderter absoluter Stellung des wenigstens einen hinteren Endes im Laderaum lediglich die absolute Stellung der wenigstens einen Einlassöffnung im Laderaum verändert wird.

Um das Verstellen des wenigstens einen hinteren Endes gegenüber der wenigstens einen Einlassöffnung mittels des wenigstens einen Verstellabschnitts auf einfache und kostengünstige Weise zu ermöglichen, kann der wenigstens eine Verstellabschnitt flexibel ausgebildet sein. Die Flexibilität des Verstellabschnitts kann dann ein Krümmen bzw. Biegen, Strecken und/oder Stauchen des Verstellabschnitts erlauben. Damit der Verstellabschnitt eine entsprechende Flexibilität bereitstellen kann, bietet es sich an, wenn der wenigstens eine flexibel ausgebildete Verstellabschnitt wenigstens im Wesentlichen aus einem, insbesondere elastomeren, Kunststoff gebildet ist.

Alternativ oder zusätzlich zu einer flexiblen Ausgestaltung kann der wenigstens eine Verstellabschnitt gelenkig, beispielsweise als durchströmbares Kugelgelenk, ausgebildet sein. Dann kann mittels des Verstellabschnitts ein Verschwenken des hinteren Endes des wenigstens einen Auslassabschnitts gegenüber der wenigstens einen Einlassöffnung erfolgen. Dabei bietet es sich hinsichtlich einer hohen Lebensdauer des wenigstens einen gelenkig ausgebildeten Verstellabschnitts an, wenn dieser aus einem, insbesondere thermoplastischen, Kunststoff und/oder einem metallischen Werkstoff gebildet ist.

Schließlich kann der wenigstens eine Verstellabschnitt alternativ oder zusätzlich teleskopierbar ausgebildet sein, sodass der Verstellabschnitt ein Verschieben des hinteren Endes des wenigstens einen Auslassabschnitts gegenüber der wenigstens einen Einlassöffnung ermöglicht. Dabei kann die Teleskopfunktion des Verstellabschnitts realisiert werden, indem der wenigstens eine Verstellabschnitt zwei gegeneinander, insbesondere ineinander, verschiebbare Teile aufweist. Unabhängig davon kann eine hohe Lebensdauer des wenigstens einen teleskopierbar ausgebildeten Verstellabschnitts gewährleistet werden, wenn dieser aus einem, insbesondere thermoplastischen, Kunststoff und/oder einem metallischen Werkstoff gebildet ist.

Unter einem teilmontierten Zustand der Luftleiteinrichtung im Laderaum wird im Sinne der Erfindung insbesondere ein Zustand verstanden, in dem die Luftleiteinrichtung zwar wenigstens teilweise in dem Laderaum, insbesondere an dem Dach oder der Transportkältemaschine, befestigt ist, ein Verstellen des wenigstens einen hinteren Endes gegenüber der wenigstens einen Einlassöffnung zwischen den wenigstens zwei Leitstellungen aber dennoch möglich ist. Im montierten Zustand der Luftleiteinrichtung in dem Laderaum kann das Verstellen des wenigstens einen hinteren Endes zwischen den wenigstens zwei Leitstellungen, beispielsweise aufgrund zusätzlich gefügter Montageverbindungen, dann wenigstens teilweise blockiert sein. Zwingend erforderlich ist dies jedoch nicht.

Bei einer ersten besonders bevorzugten Ausgestaltung des Kofferaufbaus ist die Luftleiteinrichtung derart in dem Kofferaufbau montiert, dass die Projektion der wenigstens einen Einlassöffnung und die Projektion der wenigstens einen Kühlluftöffnung jeweils in Längsrichtung des Kofferaufbaus auf eine gemeinsame Ebene quer zum Kofferaufbau einander wenigstens teilweise überdeckend angeordnet sind. So kann auf konstruktiv einfache Weise gewährleistet werden, dass wenigstens ein Teil der aus der wenigstens einen Kühlluftöffnung ausströmenden Kühlluft in die wenigstens eine Einlassöffnung einströmt.

Zusätzlich kann es sich dann anbieten, wenn wenigstens 50 % der Projektion der wenigstens einen Einlassöffnung in Längsrichtung des Kofferaufbaus innerhalb der Projektion der wenigstens einen Kühlluftöffnung in Längsrichtung des Kofferaufbaus in einer Ebene quer zum Kofferaufbau angeordnet sind. Das bietet den Vorteil, dass der Querschnittssprung der Kühlluftströmung beim Einströmen in die Einlassöffnung verhältnismäßig klein ist, sodass die Druckverluste in der Kühlluftströmung reduziert werden können und der Kofferaufbau effizienter gekühlt werden kann. Dies gilt insbesondere, wenn die Projektion der wenigstens einen Einlassöffnung in Längsrichtung des Kofferaufbaus wenigstens zu 75 %, insbesondere wenigstens zu 90 %, innerhalb der Projektion der wenigstens einen Kühlluftöffnung in Längsrichtung des Kofferaufbaus in einer Ebene quer zum Kofferaufbau angeordnet ist. Um unabhängig davon gewährleisten zu können, dass ein möglichst großer Anteil der aus der wenigstens einen Kühlluftöffnung austretenden Kühlluft in die wenigstens eine Einlassöffnung einströmt, können wenigstens 50 %, vorzugsweise wenigstens 75 %, insbesondere wenigstens 90 %, der Projektion der wenigstens einen Kühlluftöffnung in Längsrichtung des Kofferaufbaus innerhalb der Projektion der wenigstens einen Einlassöffnung in Längsrichtung des Kofferaufbaus in einer Ebene quer zum Kofferaufbau angeordnet sein.

Um die Luftleiteinrichtung zweckmäßig an unterschiedliche Positionen der Kühlluftöffnungen und die Lage des Bereichs, zu dem die Kühlluft mittels der Luftleiteinrichtung geleitet werden soll, anpassen zu können, bietet es sich an, wenn wenigstens im teilmontierten Zustand der Luftleiteinrichtung das wenigstens eine hintere Ende wenigstens im Wesentlichen entlang der Längsrichtung der Luftleiteinrichtung gegenüber der wenigstens einen Einlassöffnung zwischen den wenigstens zwei Leitstellungen verstellt werden kann. Dabei ist mit der Längsrichtung der Luftleiteinrichtung insbesondere eine Richtung gemeint, die im montierten Zustand der Luftleiteinrichtung der Längsrichtung des Kofferaufbaus entspricht. Alternativ oder zusätzlich kann es hinsichtlich einer zweckmäßigen Anpassung der Luftleiteinrichtung an die Gegebenheiten des jeweiligen Kofferaufbaus auch vorteilhaft sein, wenn wenigstens im teilmontierten Zustand der Luftleiteinrichtung das hintere Ende wenigstens im Wesentlichen entlang einer Querrichtung der Luftleiteinrichtung gegenüber der wenigstens einen Einlassöffnung zwischen den wenigstens zwei Leitstellungen verstellbar ist. Mit einer Querrichtung der Luftleiteinrichtung ist insbesondere eine Richtung gemeint, die im montierten Zustand der Luftleiteinrichtung wenigstens im Wesentlichen senkrecht zur Längsrichtung des Kofferaufbaus und vorzugsweise vertikal und/oder horizontal zu dem eben ausgerichteten Kofferaufbau angeordnet ist.

Zusätzlich kann es vorteilhaft sein, wenn das wenigstens eine hintere Ende entlang der Längsrichtung und einer Querrichtung der Luftleiteinrichtungen oder entlang zweier senkrechter Querrichtungen der Luftleiteinrichtung zwischen den wenigstens zwei Leitstellungen verstellt werden kann, wenn sich die Luftleiteinrichtung im teilmontierten Zustand befindet. Dann kann das wenigstens eine hintere Ende also entlang zweier senkrechter Richtungen zwischen den wenigstens zwei Leitstellungen verstellt werden, was einen besonders flexiblen Einsatz der Luftleiteinrichtung ermöglicht. Dies gilt insbesondere, wenn wenigstens im teilmontierten Zustand der Luftleiteinrichtung das wenigstens eine hintere Ende entlang der Längsrichtung und zweier zueinander senkrechter Querrichtungen der Luftleiteinrichtung, also entlang dreier senkrechter Richtungen, zwischen den wenigstens zwei Leitstellungen verstellbar ist.

Alternativ oder zusätzlich kann vorgesehen sein, dass der Abstand zwischen den wenigstens zwei Leitstellungen wenigstens2 cm beträgt, wobei mit dem Abstand zwischen den wenigstens zwei Leitstellungen nicht der absolute Abstand, sondern der Abstand zwischen den wenigstens zwei Leitstellungen bezogen auf die Einlassöffnung gemeint ist. So kann die Luftleiteinrichtung an stark voneinander abweichende Positionen der Kühlluftöffnung und unterschiedliche Lagen des Bereichs, zu dem die Kühlluft mittels der Kühlluftöffnung geleitet werden soll, angepasst werden. Dies gilt insbesondere, wenn der Abstand zwischen den wenigstens zwei Leitstellungen wenigstens 10 cm, vorzugsweise wenigstens 20 cm, insbesondere wenigstens 30 cm, beträgt. Dabei kann es sich bei dem Abstand zwischen den wenigstens zwei Leitstellungen um deren Abstand in Längsrichtung oder in einer Querrichtung der Luftleiteinrichtung handeln. Bevorzugt ist es jedoch, wenn die wenigstens zwei Leitstellungen in Längsrichtung und in wenigstens einer Querrichtung der Luftleiteinrichtung oder in zwei zueinander senkrechten Querrichtungen der Luftleiteinrichtung, insbesondere in Längsrichtung und zwei zueinander senkrechten Querrichtungen, einen entsprechenden Abstand zueinander aufweisen.

Um eine verbesserte Verstellbarkeit des wenigstens einen hinteren Endes gegenüber der wenigstens einen Einlassöffnung zu ermöglichen, kann die wenigstens eine Luftleiteinrichtung wenigstens zwei, insbesondere voneinander beabstandete, Verstellabschnitte aufweisen, die jeweils flexibel und/oder gelenkig und/oder teleskopierbar ausgebildet sind. Dann kann jeder der wenigstens zwei Verstellabschnitte ein Verstellen des wenigstens einen hinteren Endes gegenüber der wenigstens einen Einlassöffnung zwischen den wenigstens zwei Leitstellungen ermöglichen, wenn sich die Luftleiteinrichtung im teilmontierten Zustand befindet. Bedarfsweise kann dabei vorgesehen sein, dass die wenigstens zwei Verstellabschnitte unterschiedlich, etwa wenigstens ein Verstellabschnitt flexibel und der wenigstens eine andere Verstellabschnitt teleskopierbar, ausgebildet sind. So können unterschiedliche Vorteile unterschiedlicher Ausgestaltungen kombiniert werden.

Alternativ oder zusätzlich zu einer Ausgestaltung der Luftleiteinrichtung mit wenigstens zwei Verstellabschnitten kann vorgesehen sein, dass sich der wenigstens eine Verstellabschnitt wenigstens über einen Großteil der Länge der Luftleiteinrichtung erstreckt. So kann, insbesondere wenn der wenigstens eine Verstellabschnitt flexibel und/oder teleskopierbar ausgebildet ist, auf einfache Weise ein großer Verstellbereich geschaffen werden, innerhalb dessen das hintere Ende gegenüber der Einlassöffnung verstellt werden kann. Dies ermöglicht einen flexiblen Einsatz der Luftleiteinrichtung. Dies gilt insbesondere, wenn sich der wenigstens eine Verstellabschnitt über wenigstens im Wesentlichen die gesamte Länge der Luftleiteinrichtung erstreckt. Dann kann der Einlassabschnitt und/oder der Auslassabschnitt ein Teil des wenigstens einen Verstellabschnitts darstellen. Dabei kann mit der Länge der Luftleiteinrichtung insbesondere die Länge von der wenigstens einen Einlassöffnung zu dem wenigstens einen hinteren Ende und/oder die Länge der größten Ausdehnung der Luftleiteinrichtung gemeint sein.

Der wenigstens eine flexibel ausgebildete Verstellabschnitt kann eine hohe Flexibilität aufweisen und somit eine einfache Verstellung des wenigstens einen hinteren Endes ermöglichen, wenn dieser wenigstens eine flexible Rippe aufweist, die das Biegen, Strecken und/oder Stauchen des zugehörigen Verstellabschnitts ermöglicht. Dabei kann unter einem Strecken bzw. Stauchen ein Verlängern bzw. Verkürzen des Verstellabschnitts entlang des Verstellabschnitts verstanden werden. Darüber hinaus kann die Flexibilität des Verstellabschnitts weiter erhöht werden, wenn der wenigstens eine flexibel ausgebildete Verstellabschnitt wenigstens zwei, vorzugsweise wenigstens vier, flexible Rippen aufweist, die entlang des entsprechenden Verstellabschnitts hintereinander angeordnet sind.

Auf konstruktiv einfache Weise kann erreicht werden, dass die wenigstens eine Rippe die gewünschte Verstellung des Verstellabschnitts ermöglicht, wenn sich die wenigstens eine flexible Rippe wenigstens überwiegend senkrecht zu dem zugehörigen Verstellabschnitt erstreckt. Dann erstreckt sich die wenigstens eine flexible Rippe also nicht längs des Verstellabschnitts, sondern wenigstens im Wesentlichen in einer Ebene, die wenigstens überwiegend senkrecht zu dem Verstellabschnitt angeordnet ist. Aus demselben Grund kann es alternativ oder zusätzlich vorteilhaft sein, wenn die wenigstens eine flexible Rippe als lokale Querschnittserweiterung der Luftleiteinrichtung und/oder lokale Querschnittsverjüngung der Luftleiteinrichtung ausgebildet ist. Dabei kann der Querschnitt der Luftleiteinrichtung im Bereich der wenigstens einen Rippe größer bzw. kleiner sein als in den daran angrenzenden Bereichen.

Hinsichtlich eines geringen Gewichts und geringer Herstellungskosten der Luftleiteinrichtung kann es auch vorteilhaft sein, wenn der wenigstens eine flexibel ausgebildete Verstellabschnitt wenigstens im Wesentlichen durch wenigstens eine Plane und wenigstens ein flexibel ausgebildetes Verstärkungselement gebildet wird, das sich wenigstens teilweise entlang des Verstellabschnitts erstreckt. Dabei kann es sich bei einer Plane grundsätzlich um eine dünne und/oder flächige Struktur handeln, die nicht formsteif ist, also unter ihrem Eigengewicht in sich zusammensackt. Alternativ oder zusätzlich ist die Plane bevorzugt aus einem Gewebe und/oder einem Kunststoff hergestellt. Das wenigstens eine Verstärkungselement weist zur Verstärkung der wenigstens einen Plane eine höhere Festigkeit und/oder Steifigkeit als die wenigstens eine Plane auf, ist aber dennoch so flexibel ausgebildet, dass es ein Krümmen bzw. Biegen, Stauchen und/oder Strecken des Verstellabschnitts ermöglicht.

Bei einem aus wenigstens einer Plane und wenigstens einem Verstärkungselement gebildeten Verstellabschnitt kann es sich anbieten, wenn die wenigstens eine Plane an dem wenigstens einen Verstärkungselement gehalten ist. So kann verhindert werden, dass die Plane bzw. der durch die Plane gebildete Verstellabschnitt ohne den durch die Kühlluftströmung auf die Plane ausgeübten Druck aufgrund des Eigengewichts in sich zusammensackt. Hinsichtlich einer einfachen und kostengünstigen Fertigung kann es alternativ oder zusätzlich vorteilhaft sein, wenn das wenigstens eine Verstärkungselement stabförmig und/oder plattenförmig ausgebildet ist. Wenn mehrere Verstärkungselemente vorgesehen sind, kann also ein Teil der Verstärkungselemente stabförmig und ein anderer Teil der Verstärkungselemente plattenförmig ausgebildet sein.

Alternativ oder zusätzlich kann es vorteilhaft sein, wenn das wenigstens eine hintere Ende über wenigstens eine Führung gegenüber der wenigstens einen Einlassöffnung zwischen einer Grundstellung und einer davon beabstandeten Ausweichstellung verstellbar, insbesondere teilweise kraftschlüssig, am Dach des Kofferaufbaus gehalten ist. Dann kann also das wenigstens eine hintere Ende nicht nur im teilmontierten, sondern auch im montierten Zustand der Luftleiteirichtung gegenüber der wenigstens einen Einlassöffnung verstellt werden, jedenfalls bei hinreichender Krafteinwirkung. So wird ermöglicht, dass eine Krafteinwirkung auf die Luftleiteinrichtung, beispielsweise hervorgerufen durch eine unbeabsichtigte Staplerabfahrt oder einen unbeabsichtigten Zusammenstoß mit Ladung beim Be- und/oder Entladen des Kofferaufbaus, lediglich ein Verstellen des wenigstens einen hinteren Endes relativ zu der wenigstens einen Einlassöffnung, jedoch keine Beschädigung der Luftleiteinrichtung oder der Montagemittel zur Montage der Luftleiteinrichtung am Dach, insbesondere der Führung, nach sich zieht. Es kann also ein sogenannter Anfahrschutz realisiert werden.

Die Grundstellung und die Ausweichstellung unterscheiden sich hierbei nicht zwingend von den wenigstens zwei Leitstellungen. Die Verstellbarkeit zwischen den Leitstellungen dient jedoch primär dem Anpassen der Luftleiteinrichtung an verschiedene Anforderungen oder Ausstattungen des Kofferaufbaus. Die Grundstellung und die Ausweichstellungen beschreiben dagegen eine eigentlich nicht gewünschte Verstellung der Luftleiteinrichtung, die jedoch zweckmäßig ist, wenn die Luftleiteinrichtung versehentlich angefahren wird. Ansonsten wird es regelmäßig so sein, dass die für einen bestimmten Kofferaufbau ausgewählte Leitstellung des hintern Endes der Luftleiteinrichtung der Grundstellung entsprich, bevor es zu einem Anfahren der Luftleiteinrichtung gekommen ist. Die Führung kann dabei bedarfsweise so ausgebildet sein, dass das hintere Ende der Luftleiteinrichtung nach einem solchen Anfahren sich selbstständig wieder von der Ausgleichsstellung in die Grundstellung zurückverstellt, und zwar beispielsweise infolge einer sich aus der Verformung der Luftleiteinrichtung beim Anfahren resultierenden Rückstellkraft.

Da der Kofferaufbau üblicherweise entlang der Längsrichtung des Kofferaufbaus be- und/oder entladen wird, kann ein besonders effektiver Anfahrschutz realisiert werden, wenn das Verstellen des wenigstens einen hinteren Endes zwischen der Grundstellung und der Ausweichstellung wenigstens teilweise, insbesondere wenigstens im Wesentlichen, in Längsrichtung des Kofferaufbaus erfolgen kann, ohne dass die Luftleiteinrichtung wenigstens teilweise demontiert werden muss. Alternativ oder zusätzlich kann es sich anbieten, wenn die wenigstens eine Führung als Schiene oder als Schienensystem ausgebildet ist. So kann auf konstruktiv einfache Weise ein definiertes Verstellen des wenigstens einen hinteren Endes von der Grundstellung in die Ausweichstellung und zurück realisiert werden.

Ein Anfahrschutz kann alternativ oder zusätzlich auch realisiert werden, wenn die Luftleiteinrichtung wenigstens abschnittsweise aus einem elastomeren Kunststoff gebildet ist. Dann kann sich die Luftleiteinrichtung bei einer äußeren Krafteinwirkung reversibel verformen, ohne dass es dabei zu einer Beschädigung der Luftleiteinrichtung und/oder der Transportkältemaschine kommt. Nach Wegfall der äußeren Krafteinwirkung kann die Luftleiteinrichtung dann aufgrund der elastischen Rückstellkraft wieder ihre ursprüngliche Form annehmen. Ein besonders effektiver Anfahrschutz ergibt sich zudem, wenn nicht nur ein Abschnitt der Luftleiteinrichtung, sondern wenigstens im Wesentlichen die gesamte Luftleiteinrichtung aus einem elastomeren Kunststoff gebildet ist.

Unabhängig davon, ob lediglich ein Abschnitt oder wenigstens im Wesentlichen die gesamte Luftleiteinrichtung aus einem elastomeren Kunststoff gebildet ist, bietet sich ein entsprechender Kunststoff an, um die Anfahrschutzfunktion wie gewünscht realisieren zu können. Alternativ oder zusätzlich kann es aus demselben Grund vorteilhaft sein, wenn der, insbesondere elastomere Kunststoff, ein Biegemodul zwischen 50 MPa und 350 MPa, vorzugsweise zwischen 100 MPa und 300 MPa, insbesondere zwischen 120 MPa und 270 MPa, aufweist. Dabei wird das Biegemodul insbesondere gemäß der DIN EN ISO 178 (Kunststoffe - Bestimmung der Biegeeigenschaften, Stand September 2013) bestimmt. Bedarfsweise kann es aus Kostengesichtspunkten und/oder aus herstellungstechnischen Gründen bevorzugt sein, wenn ein Abschnitt oder wenigstens im Wesentlichen die gesamte Luftleiteinrichtung aus Polyethylen gebildet ist.

Bei der Montage der Luftleiteinrichtung in dem Laderaum kann eine einfache Ausrichtung der wenigstens einen Einlassöffnung relativ zu der wenigstens einen Kühlluftöffnung ermöglicht werden, wenn der wenigstens eine Einlassabschnitt an der Stirnwand des Kofferaufbaus und/oder an der Transportkältemaschine befestigt ist. Alternativ oder zusätzlich kann es vorteilhaft sein, wenn die wenigstens eine Einlassöffnung wenigstens im Wesentlichen spaltfrei mit der wenigstens einen Kühlluftöffnung verbunden ist, sodass wenigstens im Wesentlichen die gesamte aus der wenigstens einen Kühlluftöffnung ausströmende Kühlluft in die wenigstens eine Einlassöffnung einströmt. Dies kann zu einer effizienten und gleichmäßigen Kühlung des Laderaums beitragen.

Zu einer effizienten und gleichmäßigen Kühlung des Laderaums kann es ebenfalls beitragen, wenn die Luftleiteinrichtung wenigstens über 50 % ihrer Länge als wenigstens im Wesentlichen umlaufend geschlossener Kanal ausgebildet ist. So kann nämlich sicher vermieden werden, dass es entlang eines Großteils der Luftleiteinrichtung zu signifikanten Volumenstromverlusten der Kühlluftströmung kommt, was die von der Transportkältemaschine bereitgestellte Leistung zum Fördern der Kühlluft vermindert. Vor diesem Hintergrund ist es besonders vorteilhaft, wenn die Luftleiteinrichtung wenigstens über 70 % der Länge, insbesondere wenigstens im Wesentlichen über die gesamte Länge, als wenigstens im Wesentlichen umlaufend geschlossener Kanal ausgebildet ist.

Alternativ oder zusätzlich kann es hinsichtlich einer effizienten Kühlung des Laderaums vorteilhaft sein, wenn sich der durch die Luftleiteinrichtung definierte Strömungsquerschnitt wenigstens über 50 % der Länge der Luftleiteinrichtung allenfalls wenigstens im Wesentlichen ausschließlich stetig ändert. Dann kann der Strömungsquerschnitt der Kühlluftströmung entlang wenigstens 50 % der Länge der Luftleiteinrichtung also konstant bleiben und/oder sich stetig ändern. So kann über einen Großteil der Länge der Luftleiteinrichtung vermieden werden, dass es zu Querschnittssprüngen in der Kühlluftströmung kommt, was zu erhöhten Druckverlusten in der Kühlluftströmung führt. Dementsprechend bietet es sich insbesondere an, wenn sich der durch die Luftleiteinrichtung definierte Strömungsquerschnitt wenigstens über 70 % der Länge, insbesondere wenigstens im Wesentlichen über die gesamte Länge, der Luftleiteinrichtung allenfalls ausschließlich stetig ändert.

Ebenfalls im Hinblick auf geringe Strömungsverluste in der Kühlluftströmung und somit eine effiziente Kühlung des Laderaums bietet es sich an, wenn das Verhältnis der Fläche des größten durch die Luftleiteinrichtung definierten Strömungsquerschnitts zu der Fläche des kleinsten durch die Luftleiteinrichtung definierten Strömungsquerschnitts höchstens 2 beträgt. Dann ist insbesondere der größte Strömungsquerschnitt der Kühlluftströmung entlang der Luftleiteinrichtung also höchstens doppelt so groß wie der kleinste Strömungsquerschnitt der Kühlluftströmung entlang der Luftleiteinrichtung. Je kleiner die Abweichungen der Flächen der Strömungsquerschnitte entlang der Luftleiteinrichtung sind, desto geringer sind die sich ergebenden Strömungsverluste. Deshalb bietet es sich insbesondere an, wenn das Flächenverhältnis des größten durch die Luftleiteinrichtung definierten Strömungsquerschnitts zu dem kleinsten durch die Luftleiteinrichtung definierten Strömungsquerschnitt höchstens 2, vorzugsweise höchstens 1,5, insbesondere höchstens 1,2, weiter insbesondere höchstens 1,0, beträgt.

Um auch die weiter von der wenigstens einen Kühlluftöffnung beabstandeten Bereiche des Laderaums mit einer ausreichenden Menge an Kühlluft versorgen und somit eine gleichmäßige Temperaturverteilung in dem Laderaum erreichen zu können, ist bevorzugt wenigstens ein Luftkanal vorgesehen. Mittels des wenigstens einen Luftkanals kann dann die aus dem wenigstens einen hinteren Ende des wenigstens einen Auslassabschnitts ausströmende Kühlluft in wenigstens einen, insbesondere in Längsrichtung des Kofferaufbaus, von dem wenigstens einen hinteren Ende beabstandeten Bereich des Laderaums geleitet werden. Damit der Luftkanal das Be- und Entladen des Kofferaufbaus möglichst nicht beeinträchtigt und zudem eine gewünschte Zirkulation der Kühlluft in dem Laderaum erreicht werden kann, bietet es sich an, wenn der wenigstens eine Luftkanal im Bereich des Dachs des Kofferaufbaus angeordnet ist. Dann bietet es sich hinsichtlich einer einfachen Befestigung des Luftkanals im Laderaum an, wenn dieser am Dach des Kofferaufbaus gehalten ist. Alternativ oder zusätzlich zu einer Anordnung im Bereich des Dachs kann sich der wenigstens eine Luftkanal wenigstens überwiegend, insbesondere wenigstens im Wesentlichen, in Längsrichtung des Kofferaufbaus erstrecken. So kann die Kühlluft effizient in Richtung der Rückwand des Laderaums geleitet werden.

Eine einfache und zweckdienliche Ausgestaltung des wenigstens einen Luftkanals kann erreicht werden, wenn dieser durch das Dach des Kofferaufbaus und wenigstens ein sich wenigstens abschnittsweise entlang des Luftkanals erstreckendes Hüllelement gebildet wird, das den Luftkanal wenigstens überwiegend gegenüber dem Laderaum begrenzt. Dabei kann es hinsichtlich des Gewichts und der Herstellungskosten des Luftkanals vorteilhaft sein, wenn das wenigstens eine Hüllelement aus einer Plane gebildet ist.

Um die Kühlluft effektiv in Richtung der Rückwand leiten zu können, bietet es sich an, wenn der wenigstens eine Luftkanal an seinem der wenigstens einen Luftleiteinrichtung abgewandten Ende, bei dem es sich insbesondere um ein Längsende des wenigstens einen Luftkanals handeln kann, wenigstens eine Luftkanalöffnung aufweist. Über diese Luftkanalöffnung kann die Kühlluft dann aus dem Luftkanal heraus in den Laderaum strömen. Alternativ oder zusätzlich kann der Luftkanal auch zwischen dem der Luftleiteinrichtung abgewandten Ende, insbesondere Längsende, und dem der Luftleiteinrichtung zugewandten Ende, insbesondere Längsende, wenigstens eine Luftkanalöffnung aufweisen. So kann auch zwischen den beiden Enden, insbesondere Längsenden, des Luftkanals Kühlluft aus dem Luftkanal in den Laderaum strömen, was zu einer homogeneren Temperaturverteilung in Längsrichtung des Laderaums beitragen kann.

Um die Kühlluft auch effektiv zu den Seiten des Kofferaufbaus leiten zu können, bietet es sich dabei an, wenn die wenigstens eine Luftkanalöffnung, die zwischen dem der Luftleiteinrichtung zugewandten Ende und dem der Luftleiteinrichtung abgewandten Ende des Luftkanals angeordnet ist, seitlich am Luftkanal angeordnet ist, bedarfsweise wenigstens überwiegend in eine horizontale Richtung weist. Alternativ oder zusätzlich kann es vorteilhaft sein, wenn sich die wenigstens eine Luftkanalöffnung, die zwischen dem der Luftleiteinrichtung zugewandten Ende und dem der Luftleiteinrichtung abgewandten Ende des Luftkanals angeordnet ist, wenigstens teilweise entlang des Luftkanals, bedarfsweise wenigstens über 25 %, vorzugsweise wenigstens über 50 %, insbesondere wenigstens über 90 %, der Länge des Luftkanals, erstreckt. So kann über einen großen Teil der Länge des Luftkanals gezielt Kühlluft aus dem Luftkanal in den Laderaum strömen, was eine homogene Temperaturverteilung im Laderaum fördert. Wenn dabei mehrere Luftkanalöffnungen, die zwischen dem der Luftleiteinrichtung zugewandten Ende und dem der Luftleiteinrichtung abgewandten Ende des Luftkanals angeordnet sind, vorgesehen sind, können diese, vorzugsweise gleichmäßig verteilt, hintereinander angeordnet sein und sich gemeinsam über einen entsprechenden Teil der Länge des Luftkanals erstrecken.

Hinsichtlich eines effektiven Anfahrschutzes für die Luftleiteinrichtung und/oder den Luftkanal bietet es sich an, wenn das wenigstens eine hintere Ende gegenüber dem wenigstens einen Luftkanal zwischen zwei voneinander beabstandeten Stellungen, bei denen es sich bedarfsweise um die Grundstellung und die Ausweichstellung handeln kann, verstellbar, insbesondere verschiebbar, ist. Dann ist also das wenigstens eine hintere Ende und der wenigstens eine Luftkanal in wenigstens einer Richtung derart unverbunden, dass wenigstens in dieser Richtung eine Relativbewegung zwischen dem hinteren Ende und dem Luftkanal ermöglicht wird. So kann verhindert werden, dass der wenigstens eine Luftkanal und/oder die wenigstens eine Luftleiteinrichtung beschädigt wird, wenn es zu einer unbeabsichtigten Krafteinwirkung auf die Luftleiteinrichtung kommt, die etwa aus einer Stapleranfahrt oder einem Zusammenstoß mit Ladung beim Be- und/oder Entladen des Kofferaufbaus resultieren kann. Dabei kann aufgrund der typischen Be- und Entladungsrichtung des Kofferaufbaus ein besonders effektiver Anfahrschutz realisiert werden, wenn das Verstellen und/oder das Verschieben des hinteren Endes zwischen den beiden Stellungen, insbesondere zwischen der Grundstellung und der Ausweichstellung, wenigstens teilweise, insbesondere wenigstens im Wesentlichen in Längsrichtung des Kofferaufbaus erfolgen kann. Alternativ oder zusätzlich kann vorgesehen sein, dass das wenigstens eine hintere Ende wenigstens in einer der beiden Stellungen, insbesondere wenigstens in der Grundstellung, in dem wenigstens einen Luftkanal angeordnet ist. So wird ermöglicht, dass wenigstens in der einen Stellung, insbesondere der Grundstellung, Kühlluft von der Luftleiteinrichtung in den Luftkanal geleitet wird.

Die Erfindung wird nachfolgend anhand einer lediglich Ausführungsbeispiele darstellenden Zeichnung näher erläutert. In der Zeichnung zeigt:
- Fig. 1: ein Nutzfahrzeug mit einem erfindungsgemäßen Kofferaufbau in einer perspektivischen Ansicht,
- Fig. 2: ein Detail des Kofferaufbaus aus Fig. 1 im Bereich der Stirnwand und des Dachs in einer perspektivischen Ansicht,
- Fig. 3: das Nutzfahrzeug aus Fig. 1 im Bereich der Stirnwand in einer Ansicht von oben,
- Fig. 4: ein Detail des Kofferaufbaus aus Fig. 1 im Bereich der Stirnwand in einer Querschnittsansicht,
- Fig. 5: eine Luftleiteinrichtung des Kofferaufbaus aus Fig. 1 in einer perspektivischen Ansicht,
- Fig. 6: die Luftleiteinrichtung aus Fig. 5 in einem Längsschnitt und
- Fig. 7: Luftleiteinrichtungen in einer alternativen Ausgestaltung in einer perspektivischen Ansicht.

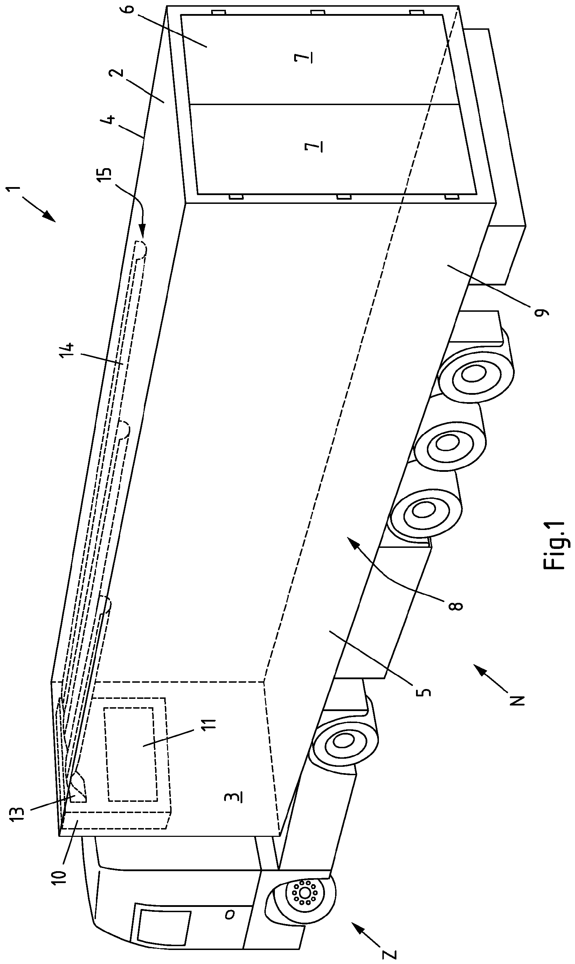

In der Fig. 1 ist ein Nutzfahrzeug N in Form eines Sattelaufliegers mit einem Nutzfahrzeugaufbau in Form eines Kofferaufbaus 1 in einer perspektivischen Ansicht dargestellt, das von einer Zugmaschine Z gezogen wird. Der Kofferaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Kofferaufbau 1 einen Laderaum 8, der nach unten durch einen Ladeboden 9 begrenzt wird, auf dem Ladung abgestellt werden kann. Die Seitenwände 4,5, die Stirnwand 3, die Flügeltüren 7 und das Dach 2 werden wenigstens im Wesentlichen aus Paneelen gebildet.

An der Stirnwand 3 ist eine Transportkältemaschine 10 montiert, die überwiegend außerhalb des Laderaums 8 angeordnet ist. Zum Kühlen des Laderaums 8 saugt die Transportkältemaschine 10 über eine mit dem Laderaum 8 verbundene Warmluftöffnung 11 Luft aus dem Laderaum 8 an und kühlt die angesaugte Luft auf eine gewünschte Temperatur herunter. Anschließend wird die abgekühlte Luft als Kühlluft wieder zurück in den Laderaum 8 geblasen. Dabei strömt die Kühlluft über drei in der Fig. 1 nicht dargestellte Kühlluftöffnungen 12 aus der Transportkältemaschine 10 in drei innerhalb des Laderaums 8 angeordnete Luftleiteinrichtungen 13. Mittels der Luftleiteinrichtungen 13 wird die Kühlluft dann in drei Luftkanäle 14 geleitet. Über die Luftkanäle 14 wird die Kühlluft schließlich zu hinteren Bereichen des Laderaums 8 transportiert, wo die Kühlluft über an den hinteren Längsenden der Luftkanäle 14 angeordnete Luftkanalöffnungen 15 aus den Luftkanälen 14 in den Laderaum 8 strömt.

Bei dem dargestellten und insoweit bevorzugten Kofferaufbau 1 sind drei Kühlluftöffnungen 12, drei Luftleiteinrichtungen 13 und drei Luftkanäle 14 vorgesehen. Es könnte aber auch jede andere Anzahl an Kühlluftöffnungen 12, Luftleiteinrichtungen 13 und/oder Luftkanälen 14 vorgesehen sein. Ebenso kommen voneinander abweichende Anzahlen an Kühlluftöffnungen 12, Luftleiteinrichtungen 13 und/oder Luftkanälen 14 in Frage.

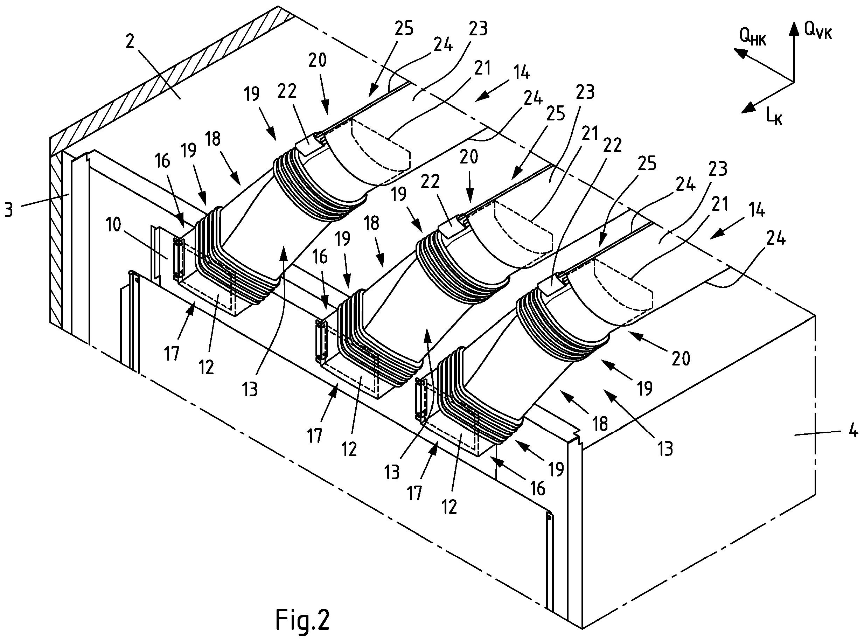

In der Fig. 2 ist der Kofferaufbau 1 im Bereich der Stirnwand 3 und des Dachs 2 dargestellt. Die gleichartig ausgebildeten Luftleiteinrichtungen 13 weisen jeweils nacheinander angeordnet einen Einlassabschnitt 16 mit einer Einlassöffnung 17, zwei durch einen mittleren Abschnitt 18 voneinander beabstandete flexibel ausgebildete Verstellabschnitte 19 sowie einen Auslassabschnitt 20 mit einem hinteren Ende 21 auf. Dabei sind die Luftleiteinrichtungen 13 jeweils über eine Verbindung mit der Transportkältemaschine 10 und eine Verbindung mit dem Dach 2 in dem Laderaum 8 montiert. So sind zum einen die Auslassabschnitte 20 jeweils über zwei auf gegenüberliegenden Seiten des entsprechenden Auslassabschnitts 20 angeordneten Führungen in Form von Schienen 22 am Dach 2 des Kofferaufbaus 1 gehalten. Zum anderen sind die Einlassabschnitte 16 derart an der Transportkältemaschine 10 befestigt, dass die Einlassöffnungen 17 spaltfrei mit den Kühlluftöffnungen 12 verbunden sind. Dabei sind zudem die Einlassöffnungen 17 und die Kühlluftöffnungen 12 derart relativ zueinander angeordnet, dass die Projektionen der Kühlluftöffnungen 12 in Längsrichtung des Kofferaufbaus L_{K} in eine Ebene quer zum Kofferaufbau in Gänze innerhalb der entsprechenden Projektionen der Einlassöffnungen 17 in Längsrichtung des Kofferaufbaus L_{K} angeordnet sind und die Projektionen der Einlassöffnungen 17 zu etwa 90 % innerhalb der Projektionen der Kühlluftöffnungen 12 in Längsrichtung des Kofferaufbaus L_{K} in einer Ebene quer zum Kofferaufbau angeordnet sind.

Bei dem dargestellten und insoweit bevorzugten Kofferaufbau 1 sind die Luftkanäle 14 jeweils durch das Dach 2 und ein Hüllelement 23 in Form einer Plane gebildet. Dabei ist das Hüllelement 23 an seinen beiden Längsrändern 24 in nicht dargestellter Weise am Dach 2 des Kofferaufbaus 1 derart befestigt, dass das Hüllelement 23 in der Mitte durchhängt und die Längsränder 24 des Hüllelements 23 vom Dach 2 beabstandet angeordnet sind. Dies führt dazu, dass der Luftkanal 14 zwischen dem Dach 2 und den Längsrändern 24 seitliche Luftkanalöffnungen 25 aufweist, die sich im Wesentlichen über die gesamte Länge des Luftkanals 14 erstrecken und über die Kühlluft seitlich aus dem Luftkanal 14 in den Laderaum 8 strömen kann.

Die hinteren Enden 21 der Auslassabschnitte 20 sind in der Fig. 2 jeweils in einer Grundstellung abgebildet, in der sich die Auslassabschnitte 20 teilweise in die Luftkanäle 14, von denen in der Fig. 2 lediglich der in Fahrtrichtung rechts angeordnete abgebildet ist, hinein erstrecken, sodass die hinteren Enden 21 in den Luftkanälen angeordnet sind. Von dieser Grundstellung können die hinteren Enden 21, etwa wenn es zu einer Stapleranfahrt der mittleren Abschnitte 18 der Luftleiteinrichtungen 13 kommt, über die Schienen 22 entlang der Längsrichtung des Kofferaufbaus L_{K} in eine Ausweichstellung verschoben werden. Dabei werden die Auslassabschnitte 20 jeweils teilweise aus dem zugehörigen Luftkanal 14 herausgezogen und die Verstellabschnitte 19 gestaucht und gebogen, sodass sich der Abstand zwischen den hinteren Enden 21 und den Einlassöffnungen 17 in Längsrichtung des Kofferaufbaus L_{K} verringert. Zudem sind die dargestellten und insoweit bevorzugten Luftleiteinrichtungen 13 aus einem elastomeren Material, beispielsweise Polyethylen (PE), hergestellt, sodass sich die Luftleiteinrichtungen 13 bei einer Stapleranfahrt elastisch verformen können.

Wenn entweder die Verbindungen der Luftleiteinrichtungen 13 zu der Transportkältemaschine 10 oder die Verbindungen zu dem Dach 2 des Kofferaufbaus 1 und den Luftleitkanälen getrennt sind, befinden sich die Luftleiteinrichtungen 13 nicht, wie in Fig. 2 dargestellt, in einem montierten Zustand, sondern in einem teilmontierten Zustand. Dann können die hinteren Enden 21 jeweils von der der in der Fig. 2 dargestellten Grundstellung entsprechenden Leitstellung relativ zu der zugehörigen Einlassöffnung 17 nicht nur in Längsrichtung des Kofferaufbaus L_{K} verschoben werden, sondern in drei zueinander senkrechten Raumrichtungen, nämlich der Längsrichtung des Kofferaufbaus L_{K}, der horizontalen Querrichtung des Kofferaufbaus Q_{HK} und der vertikalen Querrichtung des Kofferaufbaus Q_{VK}, in unterschiedliche Leitstellungen und zurück verstellt werden.

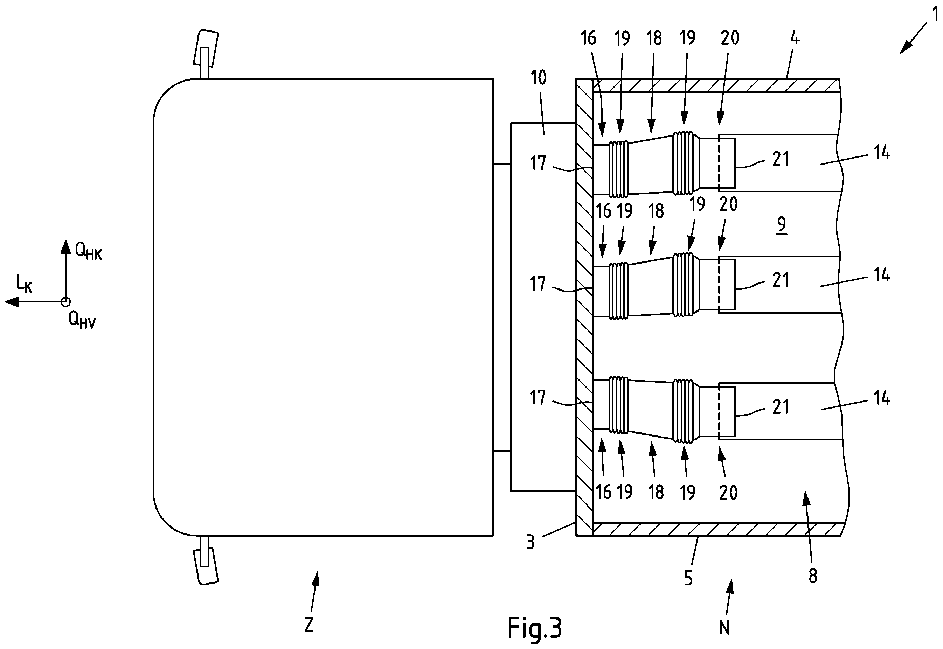

In der Fig. 3 ist das Nutzfahrzeug N in einem vorderen Bereich in einer Ansicht von oben dargestellt, wobei der Kofferaufbau 1 entlang einer horizontalen Schnittebene geschnitten dargestellt ist. Dabei sind die Luftleiteinrichtungen 13 so in dem Laderaum 8 montiert, dass die hinteren Enden 21 der beiden in Fahrtrichtung rechts angeordneten Luftleiteinrichtungen 13 relativ zu den zugehörigen Einlassöffnungen 17 jeweils eine andere Leitstellung einnehmen als das hintere Ende 21 der in Fahrtrichtung links angeordneten Luftleiteinrichtung 13. Zudem ragen die Auslassabschnitte 20 teilweise in die sich in Längsrichtung des Kofferaufbaus L_{K} erstreckenden Luftkanäle 14 hinein, sodass die hinteren Enden 21 in den Luftkanälen 14 angeordnet sind.

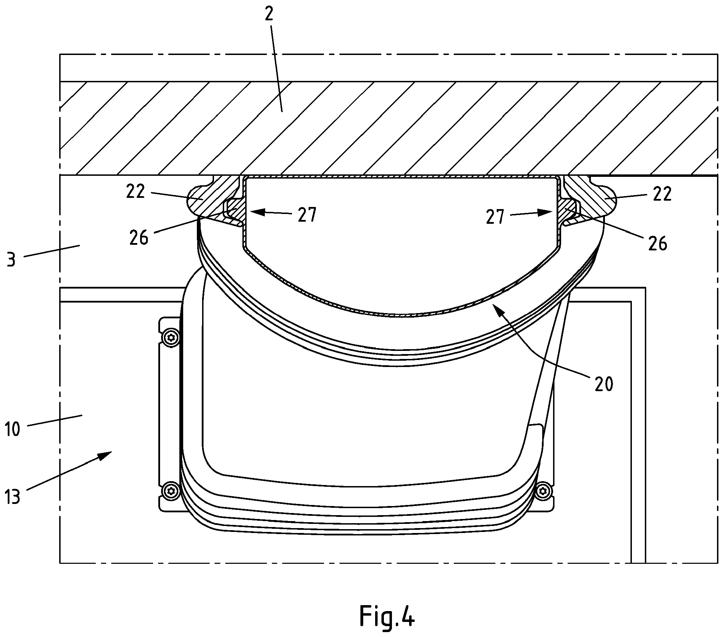

In der Fig. 4 ist der Kofferaufbau 1 im Bereich des Dachs 2 des Kofferaufbaus 1 und der in Fahrtrichtung rechts angeordneten Luftleiteinrichtung 13 in einem Querschnitt dargestellt. Vorliegend weist die Luftleiteinrichtung 13 im Bereich des Auslassabschnitts 20 zwei auf gegenüberliegenden Seiten des Auslassabschnittes 20 angeordnete Halterippen 26 auf, die sich entlang des Auslassabschnittes 20 erstrecken. Dabei greifen die Halterippen 26 in Aufnahmen 27 der an dem Dach 2 befestigten Schienen 22 ein, sodass der Auslassabschnitt 20 in Längsrichtung des Kofferaufbaus L_{K} verschiebbar an den Schienen 22 gehalten ist. Der durch die Luftleiteinrichtung 13 im Bereich des Auslassabschnitts 20 definierte Strömungsquerschnitt weist bei der dargestellten und insoweit bevorzugten Luftleiteinrichtung 13 in einem oberen Teil eine rechteckige Form und in einem unteren Teil die Form eines Kreissegments auf. Der durch die Luftleiteinrichtung 13 im Bereich des Auslassabschnitts 20 definierte Strömungsquerschnitt kann aber auch jede andere Form annehmen und kann insbesondere an die Form des der Luftleiteinrichtung 13 nachgeordneten Luftkanals 14 angepasst sein.

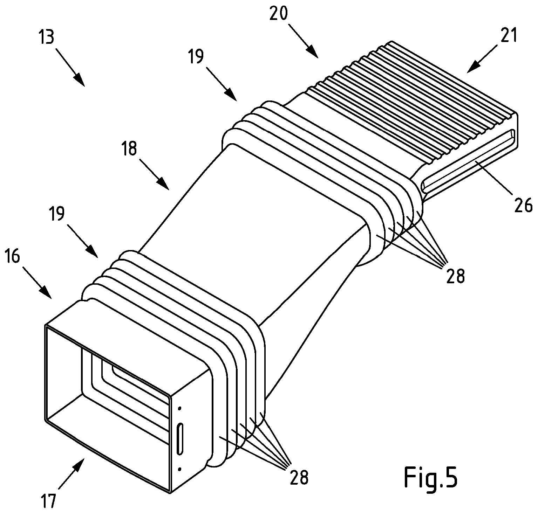

In der Fig. 5 ist eine der Luftleiteinrichtungen 13 in einer perspektivischen Ansicht dargestellt. Die Luftleiteinrichtung 13 ist über die gesamte Länge als umlaufend geschlossener Kanal ausgebildet, sodass die gesamte in die Einlassöffnung 17 einströmende Kühlluft entlang der Luftleiteinrichtung 13 zu dem hinteren Ende 21 geleitet wird und dort aus der Luftleiteinrichtung 13 ausströmt. Die beiden Verstellabschnitte 19 sind vorliegend aus jeweils fünf flexiblen Rippen 28 gebildet, die entlang des entsprechenden Verstellabschnitts 19 hintereinander angeordnet sind. Die Rippen 28 sind dabei, ebenso wie die Luftleiteinrichtung 13 selbst, umlaufend ausgebildet.

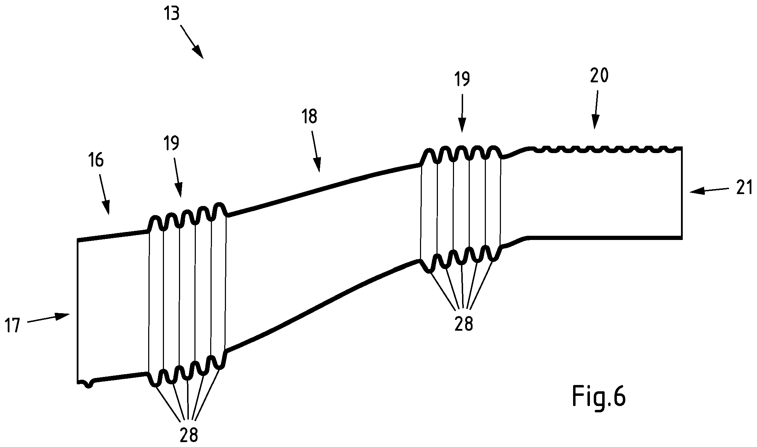

In der Fig. 6 ist die Luftleiteinrichtung 13 in einem Längsschnitt dargestellt. Bei der dargestellten und insoweit bevorzugten Luftleiteinrichtung 13 sind die Rippen 28 jeweils als lokale Querschnittserweiterungen der Luftleiteinrichtung 13 ausgebildet. Es könnte jedoch ebenso vorgesehen sein, dass einzelne oder alle Rippen 28 jeweils als lokale Querschnittsverengung der Luftleiteinrichtung 13 ausgebildet sind. Der durch die Luftleiteinrichtung 13 definierte Strömungsquerschnitt ändert sich entlang eines Großteils, nämlich entlang des Einlassabschnitts 16, des mittleren Abschnitts 18 und des Auslassabschnitts 20, der Luftleiteinrichtung 13 wenn überhaupt ausschließlich kontinuierlich. Lediglich im Bereich der Verstellabschnitte 19 ändert sich der durch die Luftleiteinrichtung 13 definierte Strömungsquerschnitt aufgrund der Ausbildung der Rippen 28 als lokale Querschnittserweiterungen sprunghaft.

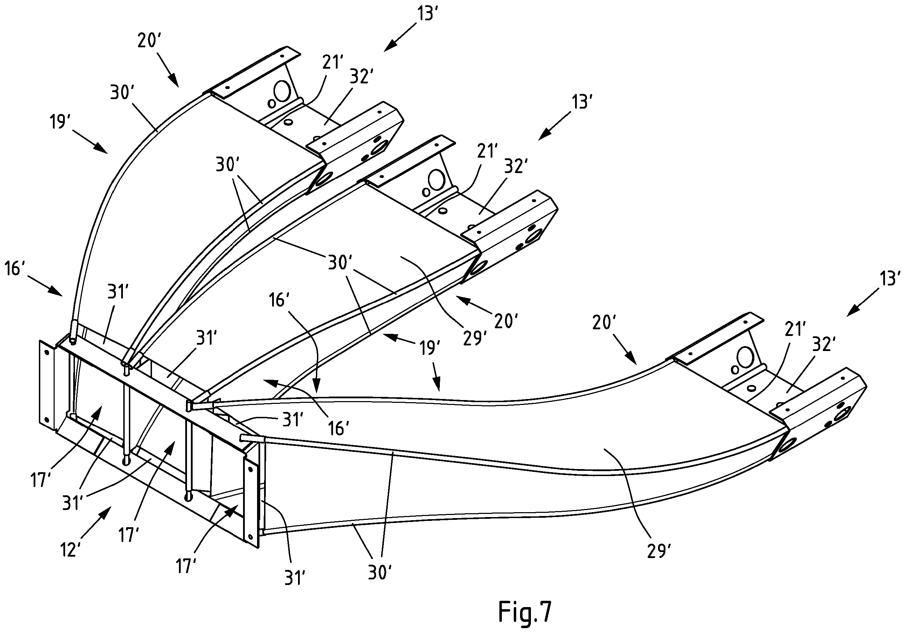

In der Fig. 7 sind Luftleiteinrichtungen 13' und eine Kühlluftöffnung 12' jeweils in einer alternativen Ausgestaltung dargestellt. Die Luftleiteinrichtungen 13' weisen im Gegensatz zu den Luftleiteinrichtungen 13 gemäß Fig. 1 bis 6 jeweils lediglich einen flexiblen Verstellabschnitt 19' auf, der sich allerdings über die gesamte Länge der entsprechenden Luftleiteinrichtung 13' erstreckt. Dementsprechend können die Einlassabschnitte 16' und die Auslassabschnitte 20' als Teil der entsprechenden Verstellabschnitte 19' angesehen werden. Zwingend ist dies jedoch nicht. Zudem weisen die Verstellabschnitte 19' nicht mehrere flexible Rippen, sondern jeweils eine Plane 29' und vier stabförmige, aber flexible Verstärkungselemente 30' auf, über die die Plane gehalten ist. Dabei können die Planen 29' beispielsweise nicht dargestellte Schlaufen aufweisen, durch die die Verstärkungselemente 30' geführt sind, und so an den Verstärkungselementen 30' gehalten sein. Im Gegensatz zu den Einlassöffnungen 17 und den Kühlluftöffnungen 12 gemäß Fig. 2 sind die Einlassöffnungen 17' und die Kühlluftöffnung 12' nicht spaltfrei miteinander verbunden, sondern sind die Einlassöffnungen 17' beabstandet zu der Kühlluftöffnung 12' angeordnet, sodass sich Spalte 31' zwischen den Einlassöffnungen 17' und der Kühlluftöffnung 12' bilden. Zwingend ist dies jedoch nicht, so könnten die Einlassöffnungen 17' und die Kühlluftöffnung 12' alternativ auch spaltfrei miteinander verbunden sein. Dies kann beispielsweise den Vorteil haben, dass auch in in unmittelbarer Nähe zur Kühlluftöffnung 12' angeordneten Bereich Kühlluft geleitet wird. Schließlich weisen die Luftleiteinrichtungen 13' anstatt der Halterippen 26 gemäß Fig. 4 und 5 jeweils eine sich an das hintere Ende 21'anschließende Halteelemente 32' zum Umgreifen einer Schiene 22 auf.

### Bezugszeichenliste

- 1: Kofferaufbau
- 2: Dach
- 3: Stirnwand
- 4,5: Seitenwand
- 6: Rückwand
- 7: Flügeltür
- 8: Laderaum
- 9: Ladeboden
- 10: Transportkältemaschine
- 11: Warmluftöffnung
- 12,12': Kühlluftöffnung
- 13,13': Luftleiteinrichtung
- 14: Luftkanal
- 15: hintere Luftkanalöffnung
- 16,16': Einlassabschnitt
- 17,17': Einlassöffnung
- 18: mittlerer Abschnitt
- 19,19': Verstellabschnitt
- 20,20': Auslassabschnitt
- 21, 21': hinteres Ende
- 22: Schiene
- 23: Hüllelement
- 24: Längsrand
- 25: seitliche Luftkanalöffnung
- 26: Halterippe
- 27: Aufnahme
- 28: Rippe
- 29': Plane
- 30': Verstärkungselement
- 31': Spalte
- 32': Halteelement

- N: Nutzfahrzeug
- L_{K}: Längsrichtung des Kofferaufbaus
- Q_{HK}: horizontale Querrichtung des Kofferaufbaus
- Q_{VK}: vertikale Querrichtung des Kofferaufbaus
- Z: Zugmaschine

## Patentansprüche

1. Kofferaufbau (1) für ein Nutzfahrzeug (N), insbesondere Lastkraftwagen, Anhänger oder Sattelauflieger, mit einem Laderaum (8) zur Aufnahme von Ladung und mit einer Transportkältemaschine (10) zum Kühlen des Laderaums (8), wobei die Transportkältemaschine (10) wenigstens eine Kühlluftöffnung (12,12') zum Ausströmen von Kühlluft aufweist, wobei wenigstens eine in dem Laderaum (8) angeordnete Luftleiteinrichtung (13,13') zum Leiten der aus der wenigstens einen Kühlluftöffnung (12,12') ausströmenden Kühlluft von wenigstens einer Einlassöffnung (17,17') wenigstens eines Einlassabschnitts (16,16') der Luftleiteinrichtung (13,13') zu wenigstens einem hinteren Ende (21,21') wenigstens eines Auslassabschnitts (20,20') der Luftleiteinrichtung (13,13') vorgesehen ist und wobei der wenigstens eine Einlassabschnitt (16,16') als wenigstens im Wesentlichen umlaufend geschlossener Kanal ausgebildet ist, **dadurch gekennzeichnet, dass** die Luftleiteinrichtung (13,13') wenigstens einen flexibel, gelenkig und/oder teleskopierbar ausgebildeten Verstellabschnitt (19,19') zum Verstellen des wenigstens einen hinteren Endes (21,21') des wenigstens einen Auslassabschnitts (20,20') gegenüber der wenigstens einen Einlassöffnung (17,17') zwischen wenigstens zwei voneinander beabstandeten Leitstellungen wenigstens im teilmontierten Zustand der Luftleiteinrichtung (13,13') im Laderaum (8) aufweist.

2. Kofferaufbau nach Anspruch 1,
**dadurch gekennzeichnet, dass** die Projektionen der wenigstens einen Einlassöffnung (17,17') und der wenigstens einen Kühlluftöffnung (12,12') in Längsrichtung des Kofferaufbaus (L_{K}) wenigstens teilweise einander überdeckend angeordnet sind und dass, vorzugsweise, wenigstens 50 %, insbesondere wenigstens 75%, weiter insbesondere wenigstens 90 %, der Projektion der wenigstens einen Einlassöffnung (17,17') innerhalb der Projektion der wenigstens einen Kühlluftöffnung (12,12') angeordnet sind.

3. Kofferaufbau nach Anspruch 1 oder 2,
**dadurch gekennzeichnet, dass** wenigstens im teilmontierten Zustand der Luftleiteinrichtung (13,13') im Laderaum (8) das wenigstens eine hintere Ende (21,21') des wenigstens einen Auslassabschnitts (20,20') wenigstens im Wesentlichen entlang der Längsrichtung der Luftleiteinrichtung (13,13') und/oder wenigstens im Wesentlichen entlang einer Querrichtung der Luftleiteinrichtung (13,13'), insbesondere wenigstens im Wesentlichen entlang zweier zueinander senkrechter Querrichtungen der Luftleiteinrichtung (13,13'), gegenüber der wenigstens einen Einlassöffnung (17,17') zwischen den wenigstens zwei Leitstellungen verstellbar ist.

4. Kofferaufbau nach einem der Ansprüche 1 bis 3,
**dadurch gekennzeichnet, dass** der Abstand zwischen den wenigstens zwei Leitstellungen, vorzugsweise in Längsrichtung der Luftleiteinrichtung (13,13') und/oder in einer Querrichtung der Luftleiteinrichtung (13,13'), insbesondere in zwei zueinander senkrechten Querrichtungen der Luftleiteinrichtung (13,13'), wenigstens 2 cm, bedarfsweise wenigstens 10 cm, vorzugsweise wenigstens 20 cm, insbesondere wenigstens 30 cm, beträgt.

5. Kofferaufbau nach einem der Ansprüche 1 bis 4,
**dadurch gekennzeichnet, dass** die Luftleiteinrichtung (13,13') wenigstens zwei, insbesondere voneinander beabstandete, flexibel, gelenkig und/oder teleskopierbar ausgebildete Verstellabschnitte (19,19') aufweist und/oder dass sich der wenigstens eine Verstellabschnitt (19,19') wenigstens über einen Großteil der Länge, insbesondere wenigstens im Wesentlichen die gesamte Länge, der Luftleiteinrichtung (13,13') erstreckt.

6. Kofferaufbau nach einem der Ansprüche 1 bis 5,
**dadurch gekennzeichnet, dass** der wenigstens eine flexibel ausgebildete Verstellabschnitt (19,19') wenigstens eine flexible Rippe (28), vorzugsweise wenigstens zwei, insbesondere wenigstens vier, entlang des zugehörigen Verstellabschnitts (19,19') hintereinander angeordnete flexible Rippen (28), zum Strecken, Stauchen und/oder Biegen des zugehörigen Verstellabschnitts (19,19') aufweist.

7. Kofferaufbau nach Anspruch 6,
**dadurch gekennzeichnet, dass** sich die wenigstens eine Rippe (28) wenigstens überwiegend senkrecht zu dem zugehörigen Verstellabschnitt (19,19') erstreckt und/oder dass die wenigstens eine flexible Rippe (28) als lokale Querschnittserweiterung der Luftleiteinrichtung (13,13') und/oder lokale Querschnittsverjüngung der Luftleiteinrichtung (13,13') ausgebildet ist.

8. Kofferaufbau nach einem der Ansprüche 1 bis 5,
**dadurch gekennzeichnet, dass** der wenigstens eine flexibel ausgebildete Verstellabschnitt (19,19') wenigstens im Wesentlichen durch wenigstens eine Plane (29') und wenigstens ein sich wenigstens teilweise entlang des zugehörigen Verstellabschnitts (19,19') erstreckendes und flexibel ausgebildetes Verstärkungselement (30') gebildet wird und dass, vorzugsweise, die wenigstens eine Plane (29') an dem wenigstens einen Verstärkungselement (30') gehalten ist und/oder das wenigstens eine Verstärkungselement (30') stabförmig und/oder plattenförmig ausgebildet ist.

9. Kofferaufbau nach einem der Ansprüche 1 bis 8,
**dadurch gekennzeichnet, dass** das wenigstens eine hintere Ende (21,21') des wenigstens einen Auslassabschnitts (20,20') über wenigstens eine Führung, insbesondere in Form einer Schiene (22), gegenüber der wenigstens einen Einlassöffnung (17,17') zwischen einer Grundstellung und einer davon beabstandeten Ausweichstellung, vorzugsweise wenigstens teilweise in Längsrichtung des Kofferaufbaus (L_{K}), verstellbar, insbesondere verschiebbar, am Dach (2) des Kofferaufbaus (1) gehalten ist.

10. Kofferaufbau nach einem der Ansprüche 1 bis 9,
**dadurch gekennzeichnet, dass** die Luftleiteinrichtung (13,13') wenigstens abschnittsweise, insbesondere wenigstens im Wesentlichen, aus einem elastomeren Kunstsoff, gebildet ist und dass, vorzugsweise, der Kunststoff ein Biegemodul zwischen 50 MPa und 350 MPa, vorzugsweise zwischen 100 MPa und 300 MPa, insbesondere zwischen 120 MPa und 270 MPa, aufweist.

11. Kofferaufbau nach einem der Ansprüche 1 bis 10,
**dadurch gekennzeichnet, dass** der wenigstens eine Einlassabschnitt (16,16') an einer Stirnwand (3) des Kofferaufbaus (1) und/oder an der Transportkältemaschine (10) befestigt ist und/oder dass die wenigstens eine Einlassöffnung (17,17') wenigstens im Wesentlichen spaltfrei mit der wenigstens einen Kühlluftöffnung (12,12') verbunden ist.

12. Kofferaufbau nach einem der Ansprüche 1 bis 11,
**dadurch gekennzeichnet, dass** die Luftleiteinrichtung (13,13') wenigstens über 50 % der Länge, vorzugsweise wenigstens über 70 % der Länge, insbesondere wenigstens im Wesentlichen über die gesamte Länge, der Luftleiteinrichtung (13,13') als wenigstens im Wesentlichen umlaufend geschlossener Kanal ausgebildet ist und/oder dass sich der durch die Luftleiteinrichtung (13,13') definierte Strömungsquerschnitt wenigstens über 50 % der Länge, vorzugsweise wenigstens über 70 %der Länge, insbesondere wenigstens im Wesentlichen über die gesamte Länge, der Luftleiteinrichtung (13,13') ausschließlich stetig ändert und/oder dass das Flächenverhältnis des größten durch die Luftleiteinrichtung (13,13') definierten Strömungsquerschnitts zu dem kleinsten durch die Luftleiteinrichtung (13,13') definierten Strömungsquerschnitt höchstens 2, vorzugsweise höchstens 1,5, insbesondere höchstens 1,2, weiter insbesondere höchstens 1,0, beträgt.

13. Kofferaufbau nach einem der Ansprüche 1 bis 12,
**dadurch gekennzeichnet, dass** wenigstens ein, insbesondere im Bereich des Dachs (2) des Kofferaufbaus (1) angeordneter und/oder sich wenigstens überwiegend in Längsrichtung des Kofferaufbaus (L_{K}) erstreckender, Luftkanal (14) zum Leiten der aus dem wenigstens einen hinteren Ende (21,21') des wenigstens einen Auslassabschnitts (20,20') ausströmenden Kühlluft in wenigstens einen von dem wenigstens einen hinteren Ende (21,21') beabstandeten Bereich des Laderaums (8) vorgesehen ist.

14. Kofferaufbau nach Anspruch 13,
**dadurch gekennzeichnet, dass** der wenigstens eine Luftkanal (14) an dem der wenigstens einen Luftleiteinrichtung (13,13') abgewandten Ende wenigstens eine Luftkanalöffnung (15) zum Ausströmen der Kühlluft in den Laderaum (8) aufweist und/oder dass der wenigstens eine Luftkanal (14) zwischen dem der Luftleiteinrichtung (13,13') abgewandten Ende und dem der Luftleiteinrichtung (13,13') zugewandten Ende wenigstens eine, vorzugsweise seitliche und/oder sich wenigstens teilweise entlang des Luftkanals (14) erstreckende, Luftkanalöffnung (25) aufweist.

15. Kofferaufbau nach Anspruch 13 oder 14,
**dadurch gekennzeichnet, dass** das wenigstens eine hintere Ende (21,21') des wenigstens einen Auslassabschnitts (20,20') gegenüber dem wenigstens einen Luftkanal (14) zwischen wenigstens zwei voneinander beabstandeten Stellungen, insbesondere der Grundstellung und der Ausweichstellung, insbesondere wenigstens teilweise in Längsrichtung der Luftleiteinrichtung (13,13'), verstellbar, insbesondere verschiebbar, ist und dass, vorzugweise, das wenigstens eine hintere Ende (21,21') des wenigstens einen Auslassabschnitts (20,20') wenigstens in einer der wenigstens zwei Stellungen, insbesondere wenigstens in der Grundstellung, in dem wenigstens einen Luftkanal (14) angeordnet ist.

## Claims

1. Box body (1) for a commercial vehicle (N), in particular a truck, trailer or semitrailer, having a loading space (8) for receiving cargo and having a transport refrigeration machine (10) for cooling the loading space (8), wherein the transport refrigeration machine (10) has at least one cooling air opening (12, 12') for discharging cooling air, wherein at least one air guide device (13, 13') arranged in the loading space (8) is provided for guiding the cooling air, which is discharged from the at least one cooling air opening (12, 12'), from at least one inlet opening (17, 17') of at least one inlet section (16, 16') of the air guide device (13, 13') to at least one rear end (21, 21') of at least one outlet section (20, 20') of the air guide device (13, 13') and wherein the at least one inlet section (16, 16') is designed as an at least substantially circumferentially closed duct, **characterised in that** the air guide device (13, 13') has at least one adjustment section (19, 19'), which is designed in a flexible, articulated and/or telescoping manner, for adjusting the at least one rear end (21, 21') of the at least one outlet section (20, 20') relative to the at least one inlet opening (17, 17') between at least two guide positions spaced apart from one another at least in the partially assembled state of the air guide device (13, 13') in the loading space (8).

2. Box body according to claim 1, **characterised in that** the projections of the at least one inlet opening (17, 17') and of the at least one cooling air opening (12, 12') are arranged at least partially overlapping one another in the longitudinal direction of the box body (L_{K}) and **in that**, preferably, at least 50%, in particular at least 75%, more particularly at least 90%, of the projection of the at least one inlet opening (17, 17') is arranged inside the projection of the at least one cooling air opening (12, 12').

3. Box body according to claim 1 or 2, **characterised in that** at least in the partially assembled state of the air guide device (13, 13') in the loading space (8) the at least one rear end (21, 21') of the at least one outlet section (20, 20') can be adjusted relative to the at least one inlet opening (17, 17') between the at least two guide positions at least substantially along the longitudinal direction of the air guide device (13, 13') and/or at least substantially along a transverse direction of the air guide device (13, 13'), in particular at least substantially along two transverse directions of the air guide device (13, 13') perpendicular to one another.

4. Box body according to any one of claims 1 to 3, **characterised in that** the distance between the at least two guide positions, preferably in the longitudinal direction of the air guide device (13, 13') and/or in a transverse direction of the air guide device (13, 13'), in particular in two transverse directions of the air guide device (13, 13') perpendicular to one another, is at least 2 cm, if necessary at least 10 cm, preferably at least 20 cm, in particular at least 30 cm.

5. Box body according to any one of claims 1 to 4, **characterised in that** the air guide device (13, 13') has at least two adjustment sections (19, 19'), which are designed in a flexible, articulated and/or telescoping manner and are in particular spaced apart from one another, and/or **in that** the at least one adjustment section (19, 19') extends at least over a large part of the length, in particular at least substantially the entire length, of the air guide device (13, 13').

6. Box body according to any one of claims 1 to 5, **characterised in that** the at least one flexibly designed adjustment section (19, 19') has at least one flexible rib (28), preferably at least two, in particular at least four, flexible ribs (28) arranged one behind the other along the associated adjustment section (19, 19') for stretching, compressing and/or bending the associated adjustment section (19, 19').

7. Box body according to claim 6, **characterised in that** the at least one rib (28) extends at least predominantly perpendicular to the associated adjustment section (19, 19') and/or **in that** the at least one flexible rib (28) is designed as a local cross-sectional extension of the air guide device (13, 13') and/or local cross-sectional tapering of the air guide device (13, 13').

8. Box body according to any one of claims 1 to 5, **characterised in that** the at least one flexibly designed adjustment section (19, 19') is formed at least substantially by at least one tarpaulin (29') and at least one flexibly designed reinforcement element (30') extending at least partially along the associated adjustment section (19, 19') and **in that**, preferably, the at least one tarpaulin (29') is held on the at least one reinforcement element (30') and/or the at least one reinforcement element (30') is rod-shaped and/or plate-shaped.

9. Box body according to any one of claims 1 to 8, **characterised in that** the at least one rear end (21, 21') of the at least one outlet section (20, 20') is held on the roof (2) of the box body (1) via at least one guide, in particular in the form of a rail (22), so as to be adjustable, in particular displaceable, relative to the at least one inlet opening (17, 17') between an initial position and an alternative position spaced apart therefrom, preferably at least partially in the longitudinal direction of the box body (Lk).

10. Box body according to any one of claims 1 to 9, **characterised in that** the air guide device (13, 13') is formed from an elastomeric plastic at least in sections, in particular at least substantially, and **in that**, preferably, the plastic has a flexural modulus of between 50 MPa and 350 MPa, preferably of between 100 MPa and 300 MPa, in particular of between 120 MPa and 270 MPa.

11. Box body according to any one of claims 1 to 10, **characterised in that** the at least one inlet section (16, 16') is fastened to an end wall (3) of the box body (1) and/or to the transport refrigeration machine (10) and/or **in that** the at least one inlet opening (17, 17') is connected to the at least one cooling air opening (12, 12') at least substantially without a gap.

12. Box body according to any one of claims 1 to 11, **characterised in that** the air guide device (13, 13') is designed at least over 50% of the length, preferably at least over 70% of the length, in particular at least substantially over the entire length, of the air guide device (13, 13') as an at least substantially circumferentially closed duct and/or in that the flow cross-section defined by the air guide device (13, 13') changes exclusively constantly at least over 50% of the length, preferably at least over 70% of the length, in particular at least substantially over the entire length, of the air guide device (13, 13') and/or **in that** the surface ratio of the largest flow cross-section defined by the air guide device (13, 13') to the smallest flow cross-section defined by the air guide device (13, 13') is at most 2, preferably at most 1.5, in particular at most 1.2, more particularly at most 1.0.

13. Box body according to any one of claims 1 to 12, **characterised in that** at least one air duct (14) in particular arranged in the region of the roof (2) of the box body (1) and/or extending at least predominantly in the longitudinal direction of the box body (L_{K)},is provided for guiding the cooling air discharged from the at least one rear end (21, 21') of the at least one outlet section (20, 20') into at least one region of the loading space (8) spaced apart from the at least one rear end (21, 21').

14. Box body according to claim 13, **characterised in that** the at least one air duct (14) has at least one air duct opening (15) for the discharging the cooling air into the loading space (8) at the end facing away from the at least one air guide device (13, 13') and/or **in that** the at least one air duct (14) has at least one air duct opening (25) extending preferably laterally and/or at least partially along the air duct (14) between the end facing away from the air guide device (13, 13') and the end facing the air guide device (13, 13').

15. Box body according to claim 13 or 14, **characterised in that** the at least one rear end (21, 21') of the at least one outlet section (20, 20') can be adjusted, in particular displaced, relative to the at least one air duct (14) between at least two positions spaced apart from one another, in particular the initial position and the alternative position, in particular at least partially in the longitudinal direction of the air guide device (13, 13') and **in that**, preferably, the at least one rear end (21, 21') of the at least one outlet section (20, 20') is arranged at least in one of the at least two positions, in particular at least in the initial position, in which at least one air duct (14) is arranged.

## Revendications

1. Structure de coffre (1) pour un véhicule utilitaire (N), notamment un poids lourd, une remorque ou une semi-remorque, avec un compartiment de chargement (8) pour la réception d'un chargement et avec une machine frigorifique de transport (10) pour refroidir le compartiment de chargement (8), la machine frigorifique de transport (10) comportant au moins une ouverture d'air de refroidissement (12, 12') pour évacuer l'air de refroidissement, où l'on a prévu au moins un dispositif de guidage d'air (13, 13'), agencé dans le compartiment de chargement (8), pour acheminer l'air de refroidissement, sortant d'au moins une ouverture d'air de refroidissement (12, 12') d'au moins une ouverture d'admission (17, 17') d'au moins une section d'admission (16, 16') du dispositif de guidage d'air (13, 13') vers au moins une extrémité arrière (21, 21') d'au moins une section d'échappement (20, 20') du dispositif de guidage d'air (13, 13') et au moins ladite section d'admission (16, 16') étant conçue comme un conduit fermé, essentiellement circonférentiel, **caractérisée en ce que** le dispositif de guidage d'air (13, 13') comporte au moins une section de réglage (19, 19') flexible, articulée et/ou télescopique pour le réglage d'au moins une extrémité arrière (21, 21') d'au moins une section d'échappement (20, 20') par rapport à au moins une ouverture d'admission (17, 17') entre au moins deux positions de guidage espacées entre elles, au moins à l'état partiellement monté du dispositif de guidage d'air (13, 13') dans le compartiment de chargement (8).

2. Structure de coffre selon la revendication 1, **caractérisée en ce que** les projections d'au moins une ouverture d'admission (17, 17') et d'au moins une ouverture d'air de refroidissement (12, 12') dans le sens longitudinal de la structure de coffre (L_{K}) sont agencées au moins partiellement en recouvrement mutuel et **en ce que**, de préférence, au moins le 50 %, notamment au moins le 75 %, plus particulièrement au moins le 90 %, de la projection d'au moins une ouverture d'admission (17, 17') est agencée à l'intérieur de la projection d'au moins une ouverture d'air de refroidissement (12, 12').

3. Structure de coffre selon la revendication 1 ou 2, **caractérisée en ce qu'**au moins à l'état partiellement monté du dispositif de guidage d'air (13, 13') dans le compartiment de chargement (8), au moins ladite extrémité arrière (21, 21') de ladite au moins une section d'échappement (20, 20') est susceptible d'être réglée entre au moins deux positions de guidage, au moins essentiellement le long du sens longitudinal du dispositif de guidage d'air (13, 13') et/ou au moins essentiellement le long d'un sens transversal du dispositif de guidage d'air (13, 13'), notamment au moins le long de deux sens transversaux perpendiculaires du dispositif de guidage d'air (13, 13'), par rapport au moins audit ouverture d'admission (17, 17').

4. Structure de coffre selon l'une des revendications 1 à 3, **caractérisée en ce que** la distance entre au moins deux positions de guidage, de préférence dans le sens longitudinal du dispositif de guidage d'air (13, 13') et/ou dans un sens transversal du dispositif de guidage d'air (13, 13'), notamment dans deux directions transversales perpendiculaires entre elles du dispositif de guidage d'air (13, 13'), est au moins de 2 cm, si nécessaire au moins de 10 cm, de préférence au moins de 20 cm, et notamment au moins de 30 cm.

5. Structure de coffre selon l'une des revendications 1 à 4, **caractérisée en ce que** le dispositif de guidage d'air (13, 13') comporte au moins deux sections de réglage (19, 19') flexibles, articulées et/ou télescopiques, mutuellement espacées, et/ou **en ce qu'**au moins une section de réglage (19, 19') s'étend au moins sur une grande partie de la longueur, notamment au moins essentiellement sur toute la longueur du dispositif de guidage d'air (13, 13').

6. Structure de coffre selon l'une des revendications 1 à 5, **caractérisée en ce que** ladite au moins une section de réglage (19, 19'), conçue de manière flexible, présente au moins une nervure flexible (28), de préférence au moins deux, notamment au moins quatre nervures flexibles (28), agencées l'une derrière l'autre, le long de la section de réglage (19, 19') correspondante, pour allonger, comprimer et/ou la courber la section de réglage (19, 19') correspondante.

7. Structure de coffre selon la revendication 6, **caractérisée en ce qu'**au moins une nervure (28) s'étend au moins principalement perpendiculairement par rapport à la section de réglage (19, 19') correspondante et/ou **en ce qu'**au moins une nervure flexible (28) est formée comme extension locale de la section transversale du dispositif de guidage d'air (13, 13') et/ou comme rétrécissement local de la section transversale du dispositif de guidage d'air (13, 13').

8. Structure de coffre selon l'une des revendications 1 à 5, **caractérisée en ce qu'**au moins une section de réglage (19, 19'), conçue de manière flexible, est formée essentiellement par au moins une bâche (29') et au moins un élément de renforcement (30'), conçu de manière flexible, s'étendant au moins partiellement le long de la section de réglage (19, 19') correspondante et **en ce que**, de préférence, ladite au moins une bâche (29') est maintenue par au moins un élément de renforcement (30') et/ou ledit au moins un élément de renforcement (30') est formé en tant que barre et/ou plaque.

9. Structure de coffre selon l'une des revendications 1 à 8, **caractérisée en ce que** ladite au moins une extrémité arrière (21, 21') de ladite au moins une section d'échappement (20, 20') est maintenue sur le toit (2) de la structure de coffre (1) par au moins un guidage, notamment sous forme de rail (22), par rapport à au moins une ouverture d'admission (17, 17') entre une position de base et une position d'évitement s'écartant de celle-ci, de préférence au moins en partie réglable, notamment coulissant, dans le sens longitudinal de la structure de coffre (L_{K}).

10. Structure de coffre selon l'une des revendications 1 à 9, **caractérisée en ce que** le dispositif de guidage d'air (13, 13') est constitué, au moins par sections, notamment au moins essentiellement, en un matériau plastique élastomère, et **en ce que**, de préférence, le plastique présente un module de flexion entre 50 MPa et 350 MPa, de préférence entre 100 MPa et 300 MPa, notamment entre 120 MPa et 270 MPa.

11. Structure de coffre selon l'une des revendications 1 à 10, **caractérisée en ce qu'**au moins une section d'admission (16, 16') est fixée à une paroi frontale (3) de la structure de coffre (1) et/ou à la machine frigorifique de transport (10) et/ou **en ce qu'**au moins une ouverture d'admission (17, 17') est reliée, essentiellement sans interstice, à au moins une ouverture d'air de refroidissement (12, 12').

12. Structure de coffre selon l'une des revendications 1 à 11, **caractérisée en ce que** le dispositif de guidage d'air (13, 13') est constitué au moins sur 50 % de sa longueur, de préférence au moins sur 70 % de sa longueur, notamment au moins essentiellement sur toute la longueur, du dispositif de guidage d'air (13, 13') en tant que conduit fermé, essentiellement circonférentiel, et/ou **en ce que** la section transversale d'écoulement définie par le dispositif de guidage d'air (13, 13') change exclusivement en continu au moins sur 50 % de la longueur, de préférence au moins sur 70 % de la longueur, notamment au moins essentiellement sur toute la longueur, du dispositif de guidage d'air (13, 13') et/ou **en ce que** le rapport de surface de la grande section transversale d'écoulement, définie par le dispositif de guidage d'air (13, 13') par rapport à la plus petite section transversale d'écoulement, définie par le dispositif de guidage d'air (13, 13') est au moins au maximum de 2, au maximum de 1,5, notamment au maximum de 1,2, plus particulièrement de 1,0.

13. Structure de coffre selon l'une des revendications 1 à 12, **caractérisée en ce que** l'on prévoit au moins un conduit d'air (14), agencé notamment au niveau du toit (2) de la structure de coffre (1) et/ou s'étendant au moins principalement dans le sens longitudinal de la structure de coffre (L_{K}) pour acheminer l'air de refroidissement sortant de ladite au moins une extrémité arrière (21, 21') de ladite au moins une section d'échappement (20, 20') dans au moins une zone du compartiment de chargement (8) espacée de ladite au moins une extrémité arrière (21, 21').

14. Structure de coffre selon la revendication 13, **caractérisée en ce qu'**au moins un conduit d'air (14) au niveau de l'extrémité opposée audit un dispositif de guidage d'air (13, 13') présente au moins une ouverture de conduit d'air (15) pour l'écoulement de l'air de refroidissement dans le compartiment de chargement (8) et/ou **en ce que** ledit au moins un conduit d'air (14) présente au moins une ouverture de conduit d'air (25), de préférence latéral et/ou s'étendant au moins partiellement le long du conduit d'air (14), entre l'extrémité opposée au dispositif de guidage d'air (13, 13') et l'extrémité tournée vers le dispositif de guidage d'air (13, 13').

15. Structure de coffre selon la revendication 13 ou 14, **caractérisée en ce que** ladite au moins une extrémité arrière (21, 21') de ladite au moins une section d'échappement (20, 20') est susceptible d'être réglée, notamment par un mouvement coulissant, par rapport à au moins un conduit d'air (14), entre au moins deux positions espacées entre elles, notamment la position de base et la position d'évitement, notamment au moins en partie dans le sens longitudinal du dispositif de guidage d'air (13, 13'), et **en ce que**, de préférence, ladite au moins une extrémité arrière (21, 21') de ladite au moins une section d'échappement (20, 20') est agencée au moins dans l'une desdites au moins deux positions, notamment dans la position de base, dans laquelle au moins un conduit d'air (14) est agencé.
